# EUROPEAN PATENT SPECIFICATION

(11) **EP 4 425 693 B1**
(45) Date of publication and mention of the grant of the patent: **24.06.2026**
(21) Application number: 23892763.6
(22) Date of filing: 11.09.2023
(51) Int. Cl.: H01M 50/60, H01M 50/213, H01M 50/249, H01M 50/204, H01M 50/211, H01M 50/291

(54) **BATTERY MODULE, AND BATTERY PACK AND VEHICLE INCLUDING SAME**
BATTERIEMODUL UND BATTERIEPACK SOWIE FAHRZEUG DAMIT
MODULE DE BATTERIE ET BLOC-BATTERIE, ET VÉHICULE LES COMPRENANT

(30) Priority: 22.12.2022 KR 20220181620; 08.06.2023 KR 20230073840
(43) Date of publication of application: 04.09.2024
(60) Divisional application: 26167190.3
(73) Proprietor: LG Energy Solution, Ltd., Seoul 07335 (KR)
(72) Inventor: LIM, Jong-Min, Daejeon 34122 (KR)
(74) Representative: Goddar, Heinz J.
(86) International application number: PCT/KR2023/013596
(87) International publication number: WO 2024/136004

(56) References cited:
- CN-U- 215 989 147
- JP-A- 2006 156 171
- KR-A- 20190 132 631
- KR-A- 20210 067 636
- KR-A- 20220 101 474
- KR-A- 20220 101 580
- KR-A- 20220 115 532
- KR-A- 20220 120 492

## Description

### TECHNICAL FIELD

The present disclosure relates to a battery module, and a battery pack and a vehicle including the same. Specifically, the present disclosure relates to a battery module capable of preventing leakage of a filler, and a battery pack and a vehicle including the same.

The present application claims priority to Korean Patent Application No. 10-2022-0181620 filed on December 22, 2022 in the Republic of Korea.

In addition, the present application claims priority to Korean Patent Application No. 10-2023-0073840 filed on June 08, 2023 in the Republic of Korea.

### BACKGROUND ART

Secondary batteries, which are easy to apply depending on the product group and have electrical characteristics such as high energy density and the like, are generally used in electric vehicles (EVs) or hybrid electric vehicles (HEVs) that are driven by an electric drive source, as well as in portable devices. These secondary batteries are attracting attention as a new energy source for improving eco-friendliness and energy efficiency in that they have the primary advantage of being able to dramatically reduce the use of fossil fuels and in that no by-product is generated due to energy use.

Types of current secondary batteries widely used include lithium ion batteries, lithium polymer batteries, nickel cadmium batteries, nickel hydrogen batteries, nickel zinc batteries, and the like. The operating voltage of this unit secondary battery cell, that is, the unit battery cell, is approximately 2.5V to 4.5V. Therefore, when an output voltage higher than this is required, a battery pack may be configured by connecting a plurality of battery cells in series. In addition, a battery pack may be configured by connecting multiple battery cells in parallel depending on the charge/discharge capacity required for the battery pack. Accordingly, the number of battery cells included in the battery pack may be set in various ways depending on the required output voltage or charge/discharge capacity.

Meanwhile, in the case of configuring a battery pack by connecting a plurality of battery cells in series/parallel, a common method is to preferentially configure a battery module including at least one battery cell and then add other components using the at least one battery module, thereby configuring a battery pack or battery rack.

The conventional battery module is configured to include a plurality of battery cells and a cell frame. Here, the conventional battery module is configured to further include a filler filled between the battery cells to prevent heat diffusion and secure cooling performance.

However, the conventional battery module has a problem in which the filler leaks out of the cell frame. In particular, in the case of a structure in which the cell frame is configured by coupling separate upper and lower parts, there is a problem in which the filler may leak through the gap formed in the portion where the parts are coupled to each other.

To solve this problem, in the conventional battery module, there was an attempt to fill the gap between the upper and lower parts of the cell frame with gaskets or glue, thereby preventing the filler from leaking out of the cell frame. However, in the conventional battery module, the addition of separate gaskets or glue increases the manufacturing cost and the size of the entire battery module, which is disadvantageous to energy density.

Therefore, there is a need to provide a battery module capable of reducing manufacturing costs and increasing energy density while preventing leakage of the fillers, and a battery pack and a vehicle including the same. KR 2022 0120492 A describes a battery pack implementing a waterproof structure that can simplify a waterproofing process. The battery pack comprises a pack case, a first case arranged in the pack case in an upside-down position with respect to the pack case, and a battery cell arrangement fixed at one end to the first case by a cell adhesive and at the other end to the pack case by a waterproof adhesive. The assembly of the battery pack establishes a closed groove between the pack case and the first case. JP 2006 156171 A describes a battery pack including a secondary battery in a case having partition walls. The partition walls separate the inside of the case into a cooling chamber between the inner walls and a closed chamber between the inner walls and the outer walls. The secondary battery has an intermediate portion disposed in the cooling chamber and end portions arranged in the closed chamber which is filled with resin. Holes through which the secondary battery extends in the cooling chamber and in the closed chamber are hermetically sealed by an elastic cushion material.

### DISCLOSURE

### Technical Problem

Accordingly, the present invention has been designed to solve the problems of the related art, and is directed to providing a cell frame, and a battery module capable of preventing leakage of the filler, and a battery pack and a vehicle including the same.

In addition, the present invention is also to provide a battery module capable of reducing manufacturing costs and increasing energy density, and a battery pack and a vehicle including the same.

The technical problems to be solved by the present invention are not limited to the technical problems described above, and other technical problems not mentioned above will be clearly understood by those skilled in the art from the following description of the present disclosure.

### Technical Solution

In one aspect of the present invention, there is provided a cell frame, comprising: a frame wall forming a perimeter of the cell frame; a cell accommodation portion provided inside the frame wall and configured to accommodate a plurality of battery cells; and a leakage prevention groove for receiving a filler filled between the plurality of battery cells and provided between the frame wall and the cell accommodation portion. The cell accommodation portion comprises: a plurality of cylindrical cell accommodation holes arranged side by side such that the plurality of battery cells is respectively inserted into the same; and a cell accommodation wall formed along the outermost perimeter of the cell accommodation holes. The leakage prevention groove is provided between the cell accommodation wall and the frame wall.

The leakage prevention groove may comprise: a plurality of first grooves formed between the adjacent cell accommodation holes among the plurality of cell accommodation holes; and second grooves formed between adjacent first grooves among the plurality of first grooves so as to communicate with the adjacent first grooves. The first groove and the second groove have different depths.

According to another aspect of the present invention, there is provided a battery module, comprising: a plurality of battery cells; and a cell frame according to the preceding aspect.

The leakage prevention groove may be provided along the frame wall.

The cell accommodation wall may be inclined toward the leakage prevention groove.

The plurality of cell accommodation holes may be provided in a cylindrical shape, and the leakage prevention groove may be provided between adjacent cell accommodation holes among the plurality of cell accommodation holes and the frame wall.

The leakage prevention groove may be provided in a shape surrounded by the cell accommodation portion and the frame wall.

A plurality of leakage prevention grooves may be provided to be spaced apart from each other, and the plurality of the leakage prevention grooves may be provided to be connected to each other.

The leakage prevention groove may comprise an inclined surface that is provided to be inclined toward the first groove between the first groove and the second groove, thereby guiding the flow of the filler.

The height of the cell accommodation wall and the depth of the leakage prevention groove may be configured to correspond to the height of the frame wall.

The cell frame may comprise: a cell top frame configured to accommodate the upper portions of the plurality of battery cells, the frame wall of the cell top frame forming the perimeter of the cell top frame; and a cell bottom frame coupled to the bottom of the cell top frame and configured to accommodate the lower portions of the plurality of battery cells. The frame wall of the cell bottom frame may form the perimeter of the cell bottom frame. The leakage prevention groove may be provided in the cell bottom frame.

The cell frame may comprise a top opening through which the filler is filled into the cell frame.

The cell bottom frame may comprise a coupling portion to which the cell top frame is coupled, and the leakage prevention groove may be provided on the inner side of the coupling portion.

The cell bottom frame may comprise: a first wall defined as the outer wall of the cell bottom frame; and a second wall spaced inward from the first wall. The coupling portion may be provided between the first wall and the second wall such that a portion of the cell top frame is inserted into the same.

The leakage prevention groove may be provided on the inner side of the second wall.

The filler may be provided as a potting resin.

According to another aspect of the present invention, there is provided a battery pack comprising at least one battery module according to the preceding aspect.

According to another aspect of the present invention, there is provided a vehicle comprising at least one battery pack according to the preceding aspect.

### Advantageous Effects

According to the present invention, it is possible to provide a battery module capable of preventing leakage of a filler when injecting the filler, and a battery pack and a vehicle including the same.

Additionally, it is possible to prevent the filler, in the case where cell frames accommodating the upper and lower portions of the battery cell are coupled to each other, from leaking through the gap between the coupled cell frames.

In addition, since the gasket or glue is not used, it is possible to reduce manufacturing costs, increase energy density, and prevent leakage of the filler.

Furthermore, the present invention may have various other effects, and these will be described in the respective embodiments, or the description of effects that may be easily inferred by those skilled in the art will be omitted.

### DESCRIPTION OF DRAWINGS

The accompanying drawings illustrate a preferred embodiment of the present invention and, together with the detailed description of the invention, serve to provide further understanding of the technical features of the present invention, and thus, the present invention is not construed as being limited to the drawing.
FIG. 1 is an overall perspective view of a battery module according to an embodiment of the present invention.
FIG. 2 is an exploded perspective view of the battery module in FIG. 1.
FIG. 3 is a perspective view of the cell frame in FIG. 1.
FIG. 4 is a diagram of the cell frame in FIG. 1 viewed from above.
FIG. 5 is a diagram of the battery module corresponding to the cross-section I-I' in FIG. 3.
FIG. 6 is an overall perspective view of a battery module according to another embodiment of the present invention.
FIG. 7 is an exploded perspective view of the battery module in FIG. 6.
FIG. 8 is a perspective view of an embodiment of the cell bottom frame in FIG. 6.
FIG. 9 is a diagram of the battery module corresponding to the cross-section II-II' in FIG. 8.
FIG. 10 is a perspective view of another embodiment of the cell bottom frame in FIG. 6.
FIG. 11 is an enlarged view of portion A in FIG. 10.
FIG. 12 is a diagram of the battery module corresponding to the cross-section III-III' in FIG. 11.
FIG. 13 is a perspective view of another embodiment of the cell bottom frame in FIG. 6.
FIG. 14 is a diagram of the battery module corresponding to the cross-section IV-IV' in FIG. 13.
FIG. 15 is a perspective view of a battery pack including the battery module in FIG. 6.
FIG. 16 is a perspective view of a vehicle including the battery pack in FIG. 15.

### BEST MODE

Hereinafter, preferred embodiments of the present invention will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

In the drawings, the sizes of respective components or specific parts constituting the components are exaggerated, omitted, or schematically illustrated for convenience and clarity of explanation. Therefore, the sizes of the respective components do not entirely reflect the actual sizes. Descriptions of related known functions or detailed descriptions of configurations, which may obscure the subject matter of the present disclosure, may be omitted. For reference, in this specification, terms indicating direction are based on the components shown in the attached drawings, and are relative terms that may vary depending on the posture or position of the actual components.

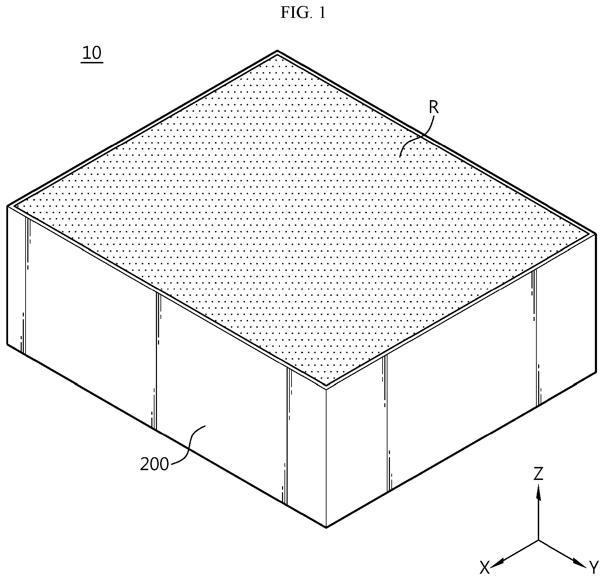

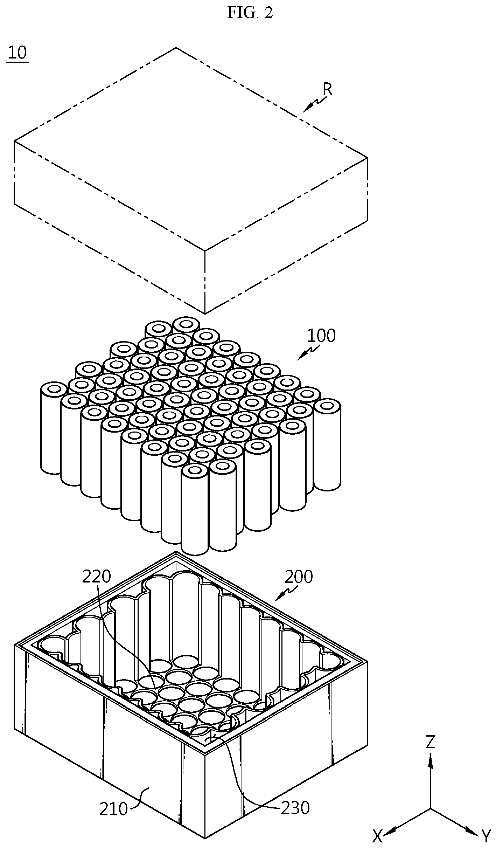

FIG. 1 is an overall perspective view of a battery module according to an embodiment of the present invention, and FIG. 2 is an exploded perspective view of the battery module in FIG. 1.

Referring to FIGS. 1 and 2, a battery module 10 according to an embodiment of the present invention may include a plurality of battery cells 100, a cell frame 200 accommodating the plurality of battery cells 100, and a filler R filled between the plurality of battery cells 100.

The battery cell 100 may be applied to any type of secondary battery, such as a prismatic, cylindrical, or pouch-type battery cell, and in this embodiment, the battery cell 100 is provided as a cylindrical battery cell. The plurality of battery cells 100 may be electrically connected to each other. The plurality of battery cells 100 may be arranged in columns and rows to form one battery module 10.

Meanwhile, the cell frame 200 may be provided to accommodate all of the plurality of battery cells 100. As shown in FIGS. 1 and 2, the cell frame 200 may be provided in a box with a top opening and four walls. Some of the walls extend along the X-axis direction in the drawing, and the remaining of the walls extend along the Y-axis direction. The plurality of battery cells 100 is accommodated in the cell frame 200 while standing upright in the Z-axis direction. Specifically, referring to FIG. 2, the cell frame 200 may include a frame wall 210 forming the perimeter of the cell frame 200 and a cell accommodation portion 220 that is provided inside the frame wall 210 and accommodates the plurality of battery cells 100.

The cell frame 200 may be made into a single unit by filling the space between the plurality of battery cells 100 with the filler R. That is, the filler R may be filled into the space formed between the plurality of battery cells 100.

Referring to FIG. 2, the filler R may be filled into the space between the plurality of battery cells 100 in the height direction (Z-axis direction) of the battery module 10. Meanwhile, the hexahedral filler R indicated by a two-dot chain line in FIG. 2 is illustrated for convenience of understanding, and the entire space between the plurality of battery cells 100 may be filled with the filler R.

The filler R may cover the upper and lower sides of the battery cell 100, thereby forming the structure of the battery module 10 together with the cell frame 200.

In addition, the filler R may fix the plurality of battery cells 100 more stably and increase the heat dissipation efficiency of the plurality of battery cells 100, thereby improving the cooling performance of the battery cells 100.

In addition, the filler R may prevent moisture or foreign substances from entering the battery cell 100, prevent chain ignition when a heat event occurs due to an abnormality in the battery cell 100, and improve the structural rigidity of the battery pack 20.

Here, the filler R may be a potting resin and may be provided to be mixed with beads such as glass bubbles. The potting resin may be formed by injecting a diluted resin material into the plurality of battery cells 100 and curing the same. Here, the injection of the resin material may be performed at a room temperature of approximately 15 to 25 degrees C to prevent thermal damage to the plurality of battery cells 100.

Specifically, the filler R may be provided as a silicone resin. It is not limited to this, and the filler R may be provided as other resin materials capable of improving the fixation and heat dissipation efficiency of the battery cell 100 in addition to the silicone resin.

The filler R may have a predetermined viscosity and may include at least two materials. Specifically, the filler R may be provided by mixing a predetermined resin and beads at a preset ratio. It is possible to reduce the cost of the potting resin for the filler R through mixing of the beads and adjust physical properties such as viscosity of the filler R depending on the mixing ratio.

The filler R may guide the thermal balance of the battery cell 100 and prevent cooling differences in the battery cell 100, thereby preventing local deterioration of the battery cell 100. In addition, the safety of the battery cell 100 may be significantly improved by preventing local deterioration of the battery cell 100.

In addition, the filler R may serve as an insulator that prevents current from flowing to the adjacent battery cells 100 when damage, etc. occurs due to an abnormal situation in at least one specific battery cell 100 among the plurality of battery cells 100.

In addition, the filler R may further include a material having high specific-heat performance. Accordingly, the filler R may increase the thermal mass and delay a temperature increase of the battery cell 100 even in situations such as rapid charging and discharging of the battery cell 100, thereby preventing a rapid temperature rise.

In addition, the filler R may further include a material having high heat resistance performance. Accordingly, the filler R may effectively prevent thermal runaway to adjacent battery cells when a thermal event such as overheating occurs in at least one specific battery cell 100 among the plurality of battery cells 100.

In addition, the filler R may further include a material having high flame-retardant performance. Accordingly, the filler R may minimize the risk of fire occurring when a thermal event such as overheating occurs in at least one specific battery cell 100 among the plurality of battery cells 100.

Meanwhile, in the conventional battery module, when the filler is injected into the cell frame, the filler may overflow and leak out of the cell frame.

The present disclosure provides a battery module 10 including a leakage prevention groove 230 in which at least a portion of the cell frame 200 is recessed to accommodate the filler R in order to prevent leakage of the filler R. Accordingly, the filler R may be accommodated in the leakage prevention groove 230 before leaking out of the cell frame 200, thereby preventing the filler R from leaking out of the cell frame 200.

Hereinafter, the structural shape of the leakage prevention groove 230 provided in the cell frame 200 to prevent leakage of the filler R will be described in more detail.

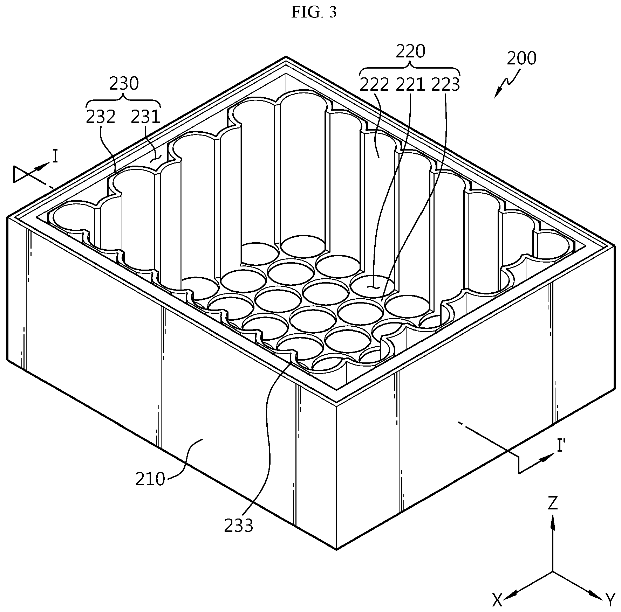

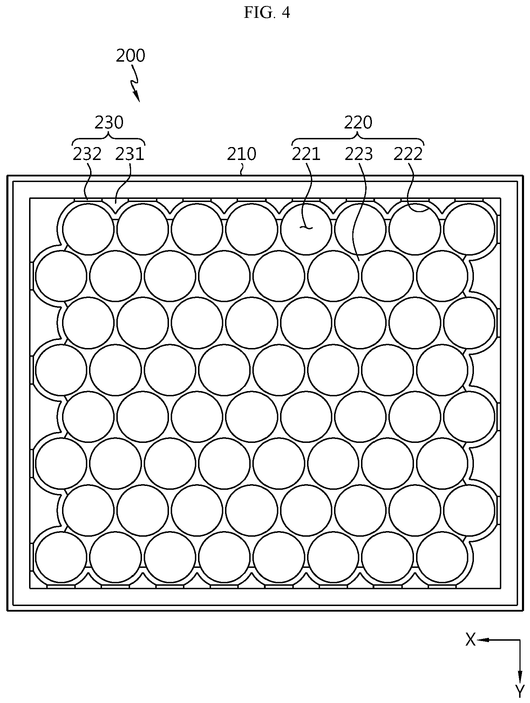

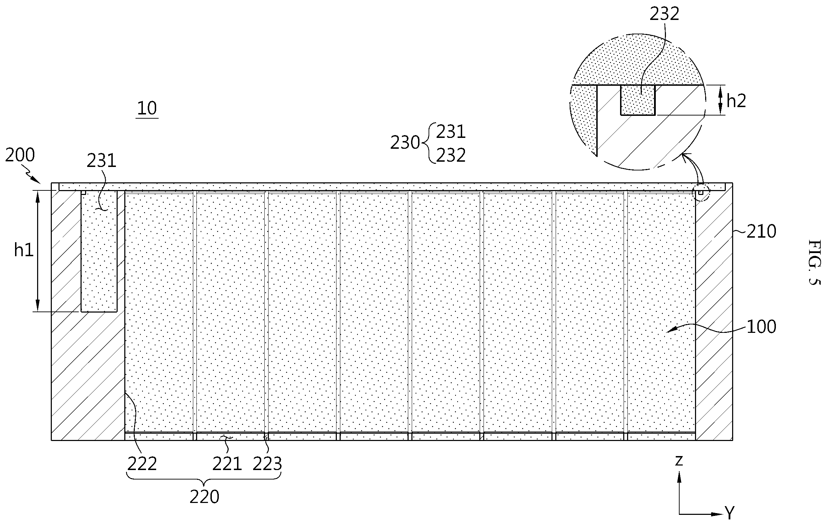

FIG. 3 is a perspective view of the cell frame in FIG. 1, FIG. 4 is a diagram of the cell frame in FIG. 1 viewed from above, and FIG. 5 is a diagram of the battery module corresponding to the cross-section I-I' in FIG. 3.

Meanwhile, referring to FIGS. 3 to 5, the cell frame 200 of the present disclosure may accommodate the plurality of battery cells 100 and have a top opening, so that the cell frame 200 may be filled with a filler R through the top opening of the cell frame 200. At this time, it would be desirable for the leakage prevention groove 230 to be provided on the top of the cell frame 200 to prevent the filler R from leaking.

The present disclosure provides the cell frame 200 including a frame wall 210 forming a rectangular frame, a cell accommodation portion 220 provided on the inner side of the frame wall 210 to accommodate a plurality of battery cells 100, and a leakage prevention groove 230 provided between the frame wall 210 and the cell accommodation portions 220. The cell frame 200 may be manufactured integrally by injection molding using plastic.

The cell accommodation portion 220 may include a plurality of cell accommodation holes 221 arranged side by side such that the plurality of battery cells 100 is respectively inserted thereinto and a cell accommodation wall 222 formed along the outermost perimeter of the cell accommodation holes 221. **In** addition, the cell accommodation portion 220 may include a cell support portion 223 that forms the plurality of cell accommodation holes 221 and supports the outer side of the battery cell 100. **In** particular, referring to FIG. 5, the cell support portion 223 may support the lower portion of the peripheral surface of the battery cell 100.

The leakage prevention groove 230 may be provided between the frame wall 210 and the cell accommodation portion 220. For example, the leakage prevention groove 230 may be provided between the cell accommodation wall 222 and the frame wall 210. **In** addition, the leakage prevention groove 230 may be provided along the frame wall 210. Accordingly, when the filler R filled into the cell accommodation portion 220 leaks to the outside of the cell accommodation wall 222, the filler R may be primarily accommodated in the leakage prevention groove 230 and prevented from overflowing the frame wall 210.

**In** this case, although not shown in FIGS. 3 and 5, the cell accommodation wall 222 may be configured to be inclined such that its height gradually decreases toward the leakage prevention groove 230. As a result, the cell accommodation wall 222 may guide the filler R leaking from the cell accommodation portion 220 to be accommodated in the leakage prevention groove 230, thereby effectively preventing the leakage of the filler R.

Meanwhile, as the battery cell 100 is provided as a cylindrical cell, the plurality of cell accommodation holes 221 may be provided in a cylindrical shape. Accordingly, as shown in FIG. 4, when the cell frame 200 is viewed from above, the plurality of cell accommodation holes 221 may be provided in a circular shape. **In** this case, the leakage prevention groove 230 may be provided along the frame wall 210 and may be provided between the two cell accommodation holes 221 provided adjacent to the frame wall 210. That is, the leakage prevention groove 230 may be provided between two adjacent cell accommodation holes 221 among the plurality of cell accommodation holes 221 and the frame wall 210. **In** this case, as shown in FIG. 4, the leakage prevention groove 230 may be provided in a shape surrounded by the cell accommodation portion 220 and the frame wall 210.

The plurality of leakage prevention grooves 230 may be provided to be spaced apart from each other, or as shown in FIGS. 3 to 5, the plurality of the leakage prevention grooves 230 may be provided connected to each other.

Specifically, the leakage prevention groove 230 may include a plurality of first grooves 231 formed between adjacent cell accommodation holes 221 among the plurality of cell accommodation holes 221 and second grooves 232 formed between adjacent first grooves 231 among the plurality of first grooves 231 so as to communicate with the adjacent first grooves 231. That is, a plurality of first grooves 231 and a plurality of second grooves 232 may be provided to be spaced apart from each other, respectively, and the first groove 231 and the second groove 232 may be provided to be connected to each other. For example, in the case where the battery cell 100 is provided as a cylindrical cell, if the shape of the first groove 231 is formed in the empty space between the plurality of cell accommodation holes 221, it may be easy to manufacture the first grooves 231 and the second grooves 232 when manufacturing a plastic injection molded product of the cell frame 200.

As a result, since the leakage prevention grooves 230 are provided in all spaces formed between the frame wall 210 and the cell accommodation portion 220, even if the filler R leaks in any direction, the leakage prevention groove 230 may accommodate the filler R. Meanwhile, although the filler R is injected from the top into the cell accommodation wall 222 in order to reduce material costs, the filler R may overflow the cell accommodation wall 222 due to a delay of the injection end time or other reasons such as vibration. At this time, the filler R flows into the first grooves 231 and the second grooves 232, instead of flowing out of the cell frame 200. Although FIG. 5 shows an example in which the first groove 231 is filled with the overflowing filler R, the first groove 231 may not be fully filled with the filler R.

In this case, as shown in FIG. 5, the depth h1 of the first groove 231 and the depth h2 of the second groove 232 may be configured to be different from each other. The first groove 231 may be formed deeper than the second groove 232 and may serve to store the leaking filler R. That is, the depth h1 of the first groove 231 may be formed greater than the depth h2 of the second groove 232. Referring to FIG. 3, the leakage prevention groove 230 may include an inclined surface 233 that is provided such that its height gradually decreases toward the first groove 231 between the first groove 231 and the second groove 232, thereby guiding the flow of the filler R. As a result, the filler R may once flow into the second groove 232, which has a lower depth, and then flow further along the inclined surface 233 to be guided to the first groove 231, which has a greater depth, and stored therein, thereby more effectively preventing the filler R from leaking out of the cell frame 200.

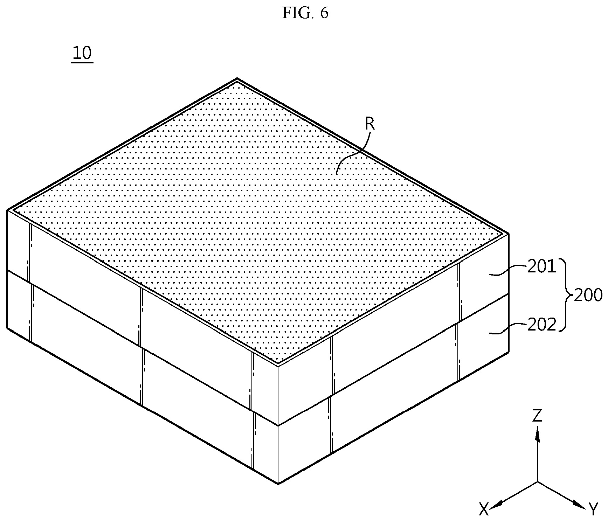

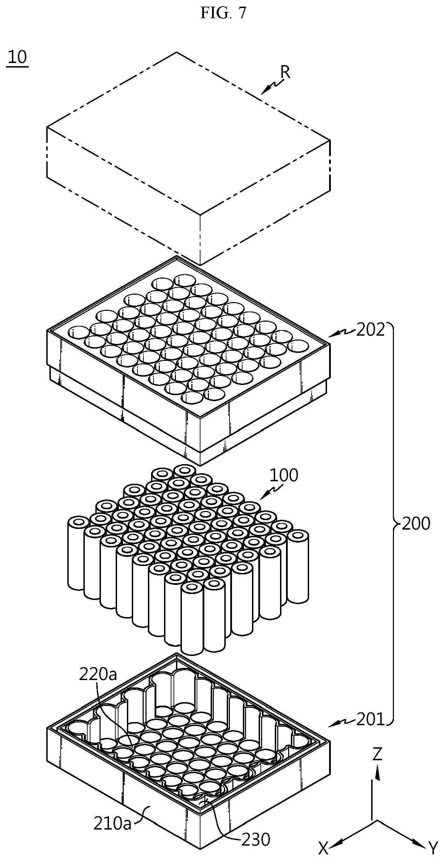

FIG. 6 is an overall perspective view of a battery module according to another embodiment of the present disclosure, and FIG. 7 is an exploded perspective view of the battery module in FIG. 6.

Unlike the above-described embodiment, in the battery module 10 shown in FIGS. 6 and 7, the cell frame 200 may include a cell top frame 202 that accommodates the upper portions of the plurality of battery cells 100 and a cell bottom frame 201 that is coupled to the bottom of the cell top frame 202 and accommodates the lower portions of the plurality of battery cells 100.

In this way, when the cell top frame 202 and the cell bottom frame 201 are coupled, the portion where the cell top frame 202 and the cell bottom frame 201 are coupled may have a certain difference therebetween according to the difference in height between the plurality of battery cells 100 and the cell frame 200. Therefore, if there is no structure such as the leakage prevention groove 230, the filler R may leak to the outside of the cell frame 200 through the coupled portion.

In the conventional battery module that has a structure in which the cell frame is divided into upper and lower parts to be coupled to each other, there was an attempt to fill the gap between the upper and lower parts of the cell frame with a gasket or glue, thereby preventing the filler from leaking out of the cell frame. However, in the conventional battery module, the addition of the separate gasket or glue increases the manufacturing cost, and the size of the entire battery module increases, which is disadvantageous to energy density.

In the present disclosure, the gasket or glue is not used, thereby reducing manufacturing costs, and to increase energy density, the leakage prevention groove 230 is provided to prevent the filler R from leaking through the portion where the cell top frame 202 and the cell bottom frame 201 are coupled when the cell top frame 202 and the cell bottom frame 201 are coupled. The leakage prevention groove 230 may be provided in the cell bottom frame 201. Accordingly, as the leakage prevention groove 230 is integrally provided with the cell frame 200, the filler R may be accommodated in the leakage prevention groove 230 before leaking to the outside of the cell frame 200 without adding any other members, so when the cell frame 200 is provided separately into the cell top frame 202 and the cell bottom frame 201, it is possible to prevent the filler R from leaking to the outside of the cell frame 200 through the coupling portion thereof. In addition, manufacturing costs may be reduced and energy density may be increased.

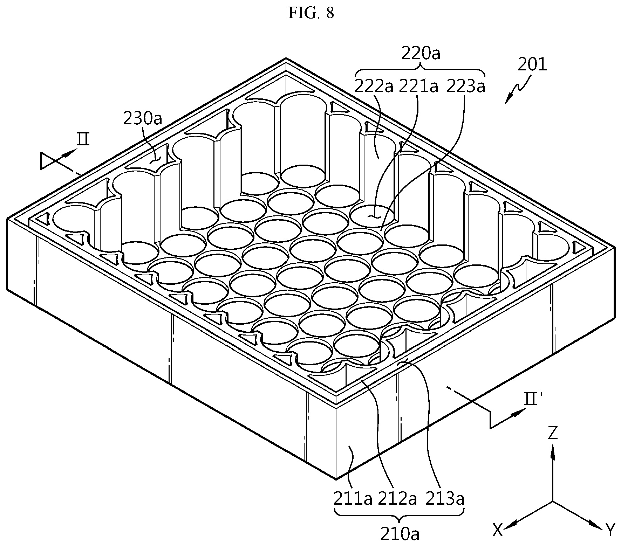

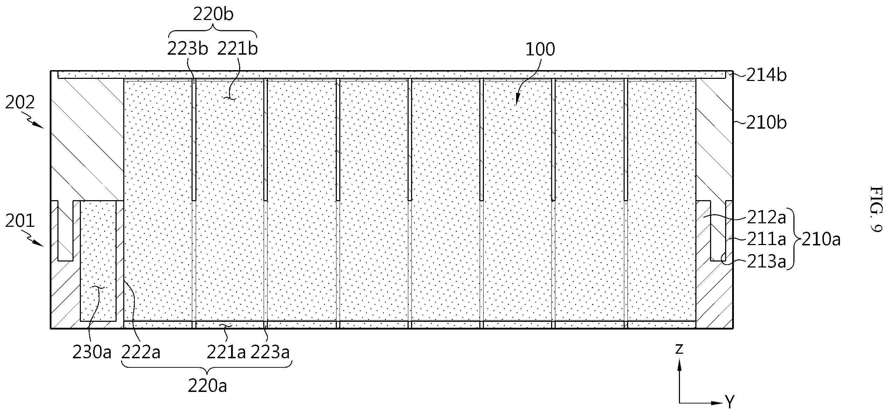

Next, a structure of the cell bottom frame 201 and the cell top frame 202 that may be included in the battery module 10 of the present disclosure according to an embodiment will be described with reference to FIGS. 8 and 9.

FIG. 8 is a perspective view of an embodiment of the cell bottom frame in FIG. 6, and FIG. 9 is a diagram of the battery module corresponding to the cross-section II-II' in FIG. 8.

Referring to FIGS. 8 and 9, the cell bottom frame 201 and the cell top frame 202 may include frame walls 210a and 210b and cell accommodation portions 220a and 220b, respectively. In this case, the frame wall 210a of the cell bottom frame 201 forms the perimeter of the cell bottom frame 201, and the cell accommodation portion 220a has the same structure as the cell accommodation portion 220 of the cell frame 200 described with reference to FIGS. 3 to 5.

Referring to FIG. 9, the frame wall 210b of the cell top frame 202 may form the perimeter of the cell top frame 202, and may further include a leakage prevention wall 214b in which a portion protrudes upward such that the filler R is prevented from leaking when the cell frame 200 is filled with the filler R. Likewise, the cell accommodation portion 220b of the cell top frame 202 has a structure that is the same as the cell accommodation portion 220 of the cell frame 200 described with reference to FIGS. 3 to 5 but is flipped up and down. In this case, the cell support portion 223b of the cell top frame 202 may support the upper portion of the peripheral surface of the battery cell 100.

Meanwhile, describing in more detail the structure in which the cell top frame 202 and the cell bottom frame 201 are coupled, the cell top frame 202 may be coupled so as to accommodate the entire cell bottom frame 201. Alternatively, as shown in FIG. 9, the cell bottom frame 201 may include a coupling portion 213a to which the cell top frame 202 is coupled. The coupling portion 213a may be provided by recessing a portion of the frame wall 210a. That is, a portion of the cell top frame 202 may be inserted into and coupled to the coupling portion 213a of the cell bottom frame 201. As a result, the cell bottom frame 201 and the cell top frame 202 may be firmly coupled to each other without any special members such as gaskets or glue, thereby improving the rigidity of the battery module 10.

Meanwhile, in order to prevent the filler R from leaking from the coupling portion 213 when the cell bottom frame 201 and the cell top frame 202 are coupled, the leakage prevention groove 230a may be provided between the frame wall 210a and the cell accommodation portion 220a. For example, the leakage prevention groove 230a may be provided between the cell accommodation wall 222a and the frame wall 210a. **In** addition, the leakage prevention groove 230a may be provided along the frame wall 210a. Accordingly, when the filler R filled into the cell accommodation portion 220a leaks to the outside of the cell accommodation wall 222a, it may be primarily accommodated in the leakage prevention groove 230a and then prevented from overflowing the frame wall 210a.

In this case, although not shown in FIGS. 8 and 9, the cell accommodation wall 222a may be configured to be inclined such that its height gradually decreases toward the leakage prevention groove 230a. As a result, the cell accommodation wall 222a may guide the filler R leaking from the cell accommodation portion 220a to be accommodated in the leakage prevention groove 230a, thereby more effectively preventing the leakage of the filler R.

Specifically, the cell bottom frame 201 may include a first wall 211a defined as the outer wall of the cell bottom frame 201 and a second wall 212a provided to be spaced inward from the first wall 211a, and the coupling portion 213a may be provided between the first wall 211a and the second wall 212a so that a portion of the frame wall 210b of the cell top frame 202 may be inserted into the same. In this case, the leakage prevention groove 230a may be provided on the inner side of the coupling portion 213a and may be provided on the inner side of the second wall 212a. Accordingly, when the cell bottom frame 201 and the cell top frame 202 are coupled, the filler R may be primarily accommodated inside the coupling portion 213a to prevent leakage, and the coupling portion 213a may also play the same role as the leakage prevention groove 230a, thereby secondarily preventing the leakage of the filler R.

Meanwhile, as the battery cell 100 is provided as a cylindrical cell, the plurality of cell accommodation holes 221a may be provided in a cylindrical shape. In this case, the leakage prevention groove 230a may be provided along the frame wall 210a and may be provided between two cell accommodation holes 221a adjacent to the frame wall 210a. That is, the leakage prevention groove 230a may be provided between two adjacent cell accommodation holes 221a among the plurality of cell accommodation holes 221a and the frame wall 210a. In this case, as shown in FIG. 8, the leakage prevention groove 230a may be provided in a shape surrounded by the cell accommodation portion 220a and the frame wall 210a.

A plurality of leakage prevention grooves 230a may be provided to be spaced apart from each other. According to an embodiment, the leakage prevention groove 230a of the cell bottom frame 201 may be configured as only a plurality of first grooves 231a formed between adj acent cell accommodation holes 221a among the plurality of cell accommodation holes 221a. In this case, the first groove 231a may serve to store the leaking filler R, as well as accommodating the same.

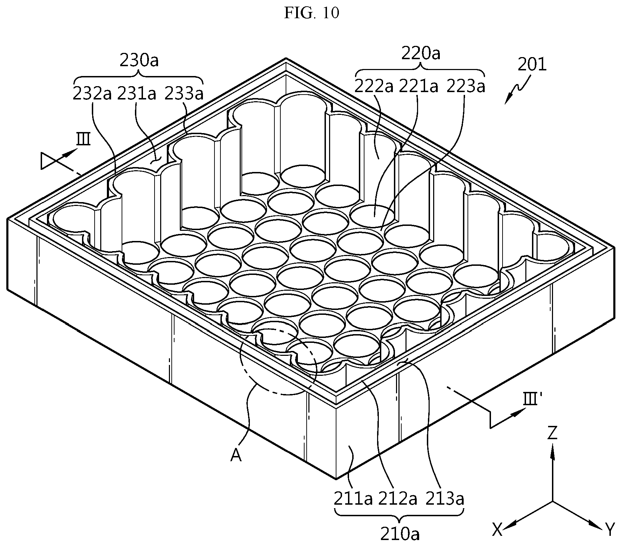

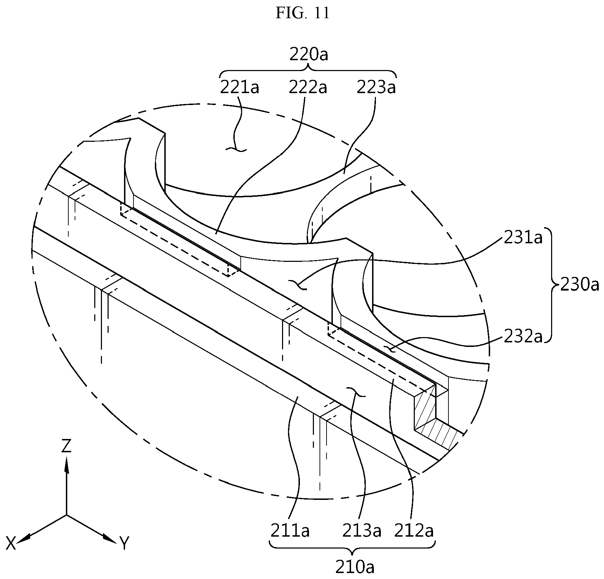

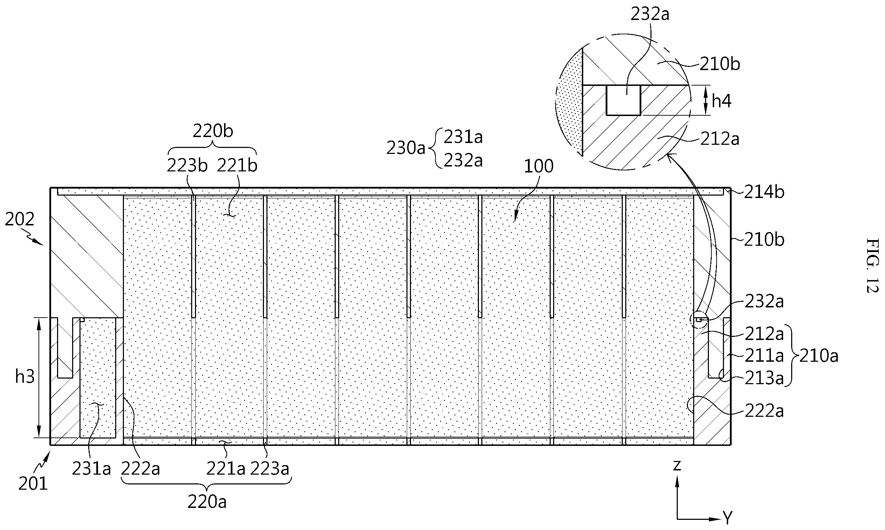

A structure of the cell bottom frame 201 according to another embodiment of the present disclosure will be described with reference to FIGS. 10 to 12. FIG. 10 is a perspective view of another embodiment of the cell bottom frame in FIG. 6, FIG. 11 is an enlarged view of portion A in FIG. 10, and FIG. 12 is a diagram of the battery module corresponding to the cross-section III-III' in FIG. 11.

If only the first grooves 231a are provided as shown in FIGS. 8 and 9, the filler R is likely to leak into the empty space between the plurality of first grooves 231a. Accordingly, as shown in FIGS. 10 to 12, a plurality of the leakage prevention grooves 230a may be provided to be connected to each other. Accordingly, since the leakage prevention groove 230a is provided in all spaces formed between the frame wall 210a and the cell accommodation portion 220a, even if the filler R leaks in any direction, the filler R may be accommodated.

Specifically, the leakage prevention groove 230a may include a plurality of first grooves 231a formed between adjacent cell accommodation holes 221a among the plurality of cell accommodation holes 221a and second grooves 232a formed between adjacent first grooves 231a among the plurality of first grooves 231a so as to communicate with the adjacent first grooves 231a. That is, a plurality of first grooves 231a and a plurality of second grooves 232a may be provided to be spaced apart from each other, respectively, and the first groove 231a and the second groove 232a may be provided to be connected to each other.

In this case, as shown in FIG. 12, the depth h3 of the first groove 231a and the depth h4 of the second groove 232a may be configured to be different from each other. The first groove 231a may be formed deeper than the second groove 232a and may serve to store the leaking filler R. That is, the depth h3 of the first groove 231a may be formed greater than the depth h4 of the second groove 232a. Referring to FIG. 10, the leakage prevention groove 230a may include an inclined surface 233a that is provided such that its height gradually decreases toward the first groove 231a between the first groove 231a and the second groove 232a, thereby guiding the flow of the filler R.

As a result, the filler R may once flow into the second groove 232a, which has a lower depth, and then flow further along the inclined surface 233a to be guided to the first groove 231a, which has a greater depth, and stored therein, thereby more effectively preventing the filler R from leaking out of the cell bottom frame 201 without deteriorating the rigidity of the cell bottom frame 201.

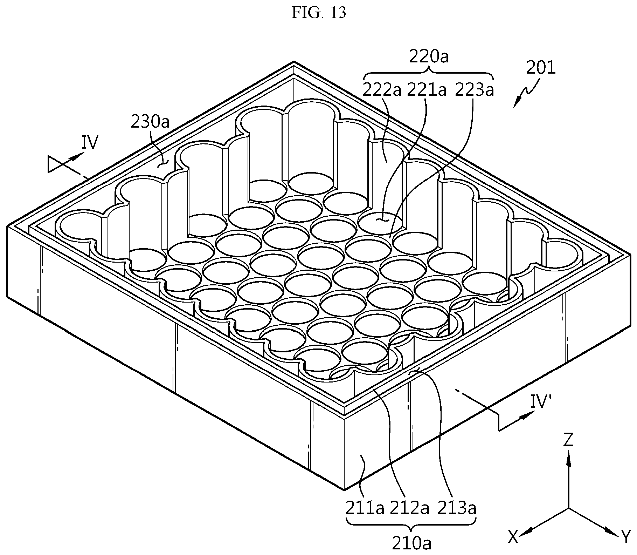

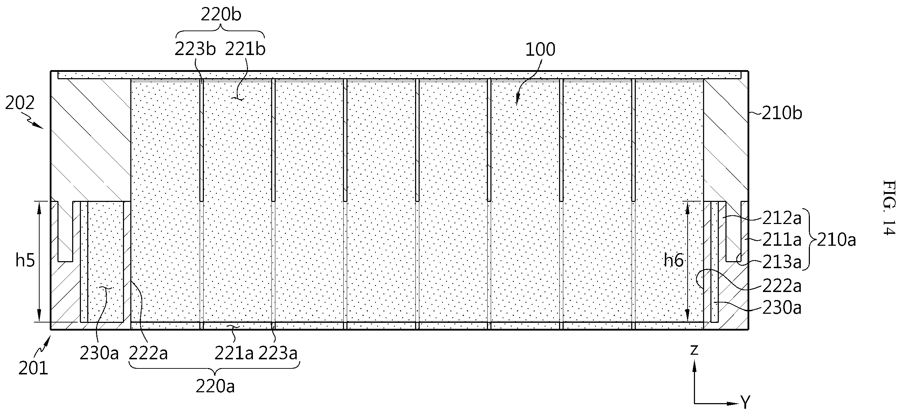

A structure of the cell bottom frame 201 according to another embodiment of the present disclosure will be described with reference to FIGS. 13 and 14. FIG. 13 is a perspective view of another embodiment of the cell bottom frame in FIG. 6, and FIG. 14 is a diagram of the battery module corresponding to the cross-section IV-IV' in FIG. 13.

Referring to FIGS. 13 and 14, the first groove 231a and the second groove 232a may be provided to be connected to each other, and the depth h5 of the first groove 231a and the depth h6 of the second groove 232a may be formed to be the same. In addition, the height of the cell accommodation wall 222a and the depth of the leakage prevention groove 230a may be provided to correspond to the height of the frame wall 210a. In this case, the cell accommodation wall 222a and the frame wall 210a may be provided to be completely spaced apart from each other.

In other words, the leakage prevention grooves 230a may be defined as all spaces between the cell accommodation wall 222a and the frame wall 210a. Accordingly, if the filler R leaks to the outside of the cell accommodation wall 222a, the leakage prevention groove 230a may store a large amount of filler R, thereby preventing the filler R from leaking to the outside of the cell frame 210a.

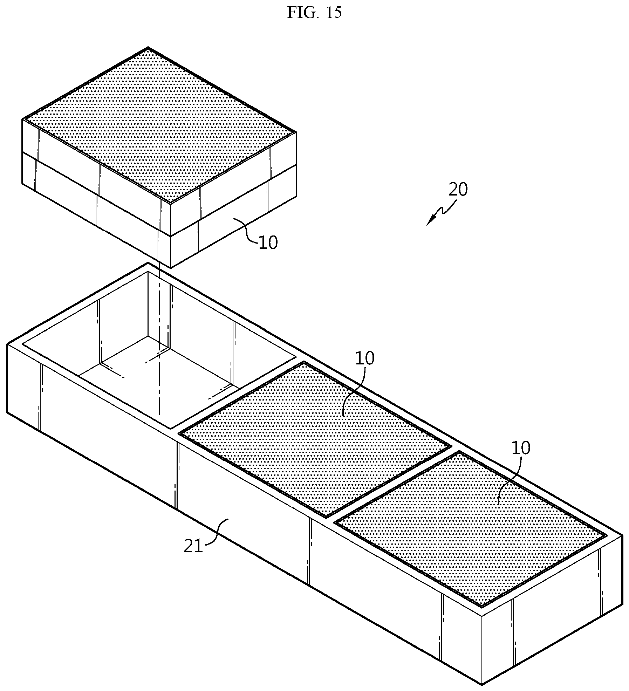

FIG. 15 is a perspective view of a battery pack including the battery module in FIG. 6.

Referring to FIG. 15, the present disclosure provides a battery pack 20 including at least one battery module 10 according to the above-described embodiments. The battery pack 20 may include a pack case 21 that accommodates the battery module 10. To this end, the pack case 21 may have an accommodation room provided therein to accommodate the battery module 10. The accommodation room may be a bottom space of the pack case 21 that is stepped from the edge of the pack case 21 to a predetermined depth.

In addition, although not shown in FIG. 15, the pack case 21 may also be configured to further include a pack cover that covers the battery module 10. Here, the pack case 21 may be bolted to the pack cover through a bolting member.

In addition, the battery pack 20 may include a battery management system (BMS) as a control module for controlling the battery module 10. The control module may manage the battery module 10 through charging and discharging, voltage, temperature sensing, etc. of the battery module 10.

In addition, although not shown, the battery pack 20 may further include a cooling unit such as a heat sink for cooling the battery module 10. The heat sink may be air-cooled or water-cooled, and may be provided above or below the bottom of the pack case 21.

In addition, it may further include various other components, such as components of the battery pack 20 known at the time of filing the present disclosure, such as relays, current sensors, and the like.

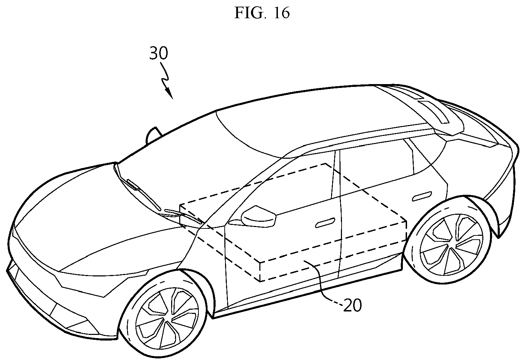

FIG. 16 is a perspective view of a vehicle including the battery pack in FIG. 15.

Referring to FIG. 16, the present disclosure may provide a vehicle 30 including at least one battery pack 20 described above. That is, the battery pack 20 according to the present disclosure may be applied to vehicles such as electric vehicles or hybrid vehicles. For example, the battery pack 20 may be installed in the car body frame under the vehicle seat or trunk space.

According to the various embodiments described above, it is possible to provide a battery module 10 capable of reducing costs and increasing energy density while preventing leakage of the filler, and a battery pack 20 and a vehicle 30 including the same.

For reference, the battery pack 20 according to the present disclosure may also be applied to ESSs (Energy Storage Systems) or various electric devices in addition to vehicles. As described above, devices, instruments, and equipment including the battery pack 20, such as the vehicle 30 according to the embodiment of the present disclosure, may include the battery module 10 described above, so they may be implemented to have all the advantages of the battery module 10.

Meanwhile, although terms indicating directions such as up, down, left, right, front, and back are used in this specification, it is obvious to those skilled in the art that these terms are only for convenience of explanation and may vary depending on the location of the target object or the location of the observer.

## Claims

1. A cell frame (200) comprising:
a frame wall (210, 210a, 201b) forming a perimeter of the cell frame (200);
a cell accommodation portion (220, 220a, 220b) provided inside the frame wall (210, 210a, 210b) and configured to accommodate a plurality of battery cells (100); and
a leakage prevention groove (230, 230a) for receiving a filler (R) filled between the plurality of battery cells (100) and provided between the frame wall (210, 210a, 210b) and the cell accommodation portion (220, 220a, 220b),
**characterized in that** the cell accommodation portion (220, 220a, 220b) comprises:
a plurality of cylindrical cell accommodation holes (221, 221a) arranged side by side such that the plurality of battery cells (100) is respectively inserted into the same; and
a cell accommodation wall (222, 222a) formed along the outermost perimeter of the cell accommodation holes (221, 221a), and
wherein the leakage prevention groove (230, 230a) is provided between the cell accommodation wall (222, 222a) and the frame wall (210, 210a, 210b).

2. The cell frame (200) according to claim 1,
wherein the leakage prevention groove (230, 230a) comprises:
a plurality of first grooves (231, 231a) formed between the adjacent cell accommodation holes among the plurality of cell accommodation holes (221, 221a); and
second grooves (232, 232a) formed between adjacent first grooves among the plurality of first grooves (231, 231a) so as to communicate with the adjacent first grooves, and
wherein the first groove (231, 231a) and the second groove (232, 232a) have different depths (h1, h2; h3, h4; h5, h6).

3. A battery module (10) comprising:
a plurality of battery cells (100); and
a cell frame (200) according to claim 1 or claim 2.

4. The battery module (10) according to claim 3,
wherein the leakage prevention groove (230, 230a) is provided along the frame wall (210, 210a, 210b).

5. The battery module (10) according to claim 3,
wherein the cell accommodation wall (222, 222a) is inclined toward the leakage prevention groove (230, 230a).

6. The battery module (10) according to claim 3,
wherein the plurality of cell accommodation holes (221, 221a) is provided in a cylindrical shape, and
wherein the leakage prevention groove (230, 230a) is provided between adjacent cell accommodation holes among the plurality of cell accommodation holes (221, 221a) and the frame wall (210, 210a, 210b).

7. The battery module (10) according to claim 6,
wherein the leakage prevention groove (230, 230a) is provided in a shape surrounded by the cell accommodation portion (220, 220a, 220b) and the frame wall (210, 210a, 210b).

8. The battery module (10) according to claim 7,
wherein a plurality of leakage prevention grooves (230a, 231, 232, 231a, 232a) is provided to be spaced apart from each other, and
wherein the plurality of the leakage prevention grooves (231, 232, 231a, 232a) is provided to be connected to each other.

9. The battery module (10) according to claim 3 when depending on claim 2,
wherein the leakage prevention groove (230, 230a) comprises an inclined surface (233, 233a) that is provided to be inclined toward the first groove (231, 231a) between the first groove (231, 231a) and the second groove (232, 232a), thereby guiding the flow of the filler (R).

10. The battery module (10) according to claim 8,
wherein the height of the cell accommodation wall (222a) and the depth ( h3,h5, h6) of the leakage prevention groove (230a, 231a) are configured to correspond to the height of the frame wall (210a).

11. The battery module (10) according to claim 4,
wherein the cell frame (200) comprises:
a cell top frame (202) configured to accommodate the upper portions of the plurality of battery cells (100), the frame wall (210b) of the cell top frame (202) forming the perimeter of the cell top frame (202); and
a cell bottom frame (201) coupled to the bottom of the cell top frame (202) and configured to accommodate the lower portions of the plurality of battery cells (100), the frame wall (210a) of the cell bottom frame (201) forming the perimeter of the cell bottom frame (201), and
wherein the leakage prevention groove (230a) is provided in the cell bottom frame (201).

12. The battery module (10) according to claim 11,
wherein the cell frame (200) comprises a top opening through which the filler (R) is filled into the cell frame (200).

13. The battery module (10) according to claim 11,
wherein the cell bottom frame (201) comprises a coupling portion (213a) to which the cell top frame (202) is coupled, and
wherein the leakage prevention groove (230a) is provided on the inner side of the coupling portion (213a).

14. The battery module (10) according to claim 13,
wherein the cell bottom frame (201) comprises:
a first wall (211a) defined as the outer wall of the cell bottom frame (201); and
a second wall (212a) spaced inward from the first wall (211a), and
wherein the coupling portion (213a) is provided between the first wall (211a) and the second wall (212a) such that a portion of the cell top frame (202) is inserted into the same.

15. The battery module (10) according to claim 14,
wherein the leakage prevention groove (230a) is provided on the inner side of the second wall (212a).

16. The battery module (10) according to claim 3,
wherein the filler (R) is provided as a potting resin.

17. A battery pack (20) comprising at least one battery module (10) according to any one of claims 1 to 16.

18. A vehicle (30) comprising at least one battery pack (20) according to claim 17.

## Patentansprüche

1. Zellenrahmen (200) aufweisend:
eine Rahmenwand (210, 210a, 201b), die einen Umfang des Zellenrahmens (200) bildet;
einen Zellenaufnahmeabschnitt (220, 220a, 220b), der innerhalb der Rahmenwand (210, 210a, 21ob) vorgesehen ist und konfiguriert ist, mehrere Batteriezellen (100) aufzunehmen; und
eine Leckverhinderungsnut (230, 230a) zum Aufnehmen eines Füllmaterials (R), das zwischen die mehreren Batteriezellen (100) gefüllt ist und zwischen der Rahmenwand (210, 210a, 21ob) und dem Zellenaufnahmeabschnitt (220, 220a, 220b) vorgesehen ist,
**dadurch gekennzeichnet, dass** der Zellenaufnahmeabschnitt (220, 220a, 220b) aufweist:
mehrere zylindrische Zellenaufnahmelöcher (221, 221a), die nebeneinander angeordnet sind, so dass die mehreren Batteriezellen (100) jeweils in dieselben eingesetzt sind; und
eine Zellenaufnahmewand (222, 222a), die entlang des äußersten Umfangs der Zellenaufnahmelöcher (221, 221a) ausgebildet ist, und
wobei die Leckverhinderungsnut (230, 230a) zwischen der Zellenaufnahmewand (222, 222a) und der Rahmenwand (210, 210a, 210b) vorgesehen ist.

2. Zellenrahmen (200) nach Anspruch 1,
wobei die Leckverhinderungsnut (230, 230a) aufweist:
mehrere erste Nuten (231, 231a), die zwischen den benachbarten Zellenaufnahmelöchern unter den mehreren Zellenaufnahmelöchern (221, 221a) ausgebildet sind; und
zweite Nuten (232, 232a), die zwischen benachbarten ersten Nuten unter den mehreren ersten Nuten (231, 231a) ausgebildet sind, um mit den benachbarten ersten Nuten in Verbindung zu stehen, und
wobei die erste Nut (231, 231a) und die zweite Nut (232, 232a) unterschiedliche Tiefen (h1, h2; h3, h4; h5, h6) aufweisen.

3. Batteriemodul (10) aufweisend:
mehrere Batteriezellen (100); und
einen Zellenrahmen (200) nach Anspruch 1 oder Anspruch 2.

4. Batteriemodul (10) nach Anspruch 3,
wobei die Leckverhinderungsnut (230, 230a) entlang der Rahmenwand (210, 210a, 210b) vorgesehen ist.

5. Batteriemodul (10) nach Anspruch 3,
wobei die Zellenaufnahmewand (222, 222a) in Richtung der Leckverhinderungsnut (230, 230a) geneigt ist.

6. Batteriemodul (10) nach Anspruch 3,
wobei die mehreren Zellenaufnahmelöcher (221, 221a) in einer zylindrischen Form vorgesehen sind, und
wobei die Leckverhinderungsnut (230, 230a) zwischen benachbarten Zellenaufnahmelöchern unter den mehreren Zellenaufnahmelöchern (221, 221a) und der Rahmenwand (210, 210a, 210b) vorgesehen ist.

7. Batteriemodul (10) nach Anspruch 6,
wobei die Leckverhinderungsnut (230, 230a) in einer Form vorgesehen ist, die von dem Zellenaufnahmeabschnitt (220, 220a, 220b) und der Rahmenwand (210, 210a, 210b) umgeben ist.

8. Batteriemodul (10) nach Anspruch 7,
wobei mehrere Leckverhinderungsnuten (230a, 231, 232, 231a, 232a) vorgesehen sind, um voneinander beabstandet zu sein, und
wobei die mehreren Leckverhinderungsnuten (231, 232, 231a, 232a) vorgesehen sind, um miteinander verbunden zu sein.

9. Batteriemodul (10) nach Anspruch 3, wenn abhängig von Anspruch 2,
wobei die Leckverhinderungsnut (230, 230a) eine geneigte Oberfläche (233, 233a) aufweist, die vorgesehen ist, um in Richtung der ersten Nut (231, 231a) zwischen der ersten Nut (231, 231a) und der zweiten Nut (232, 232a) geneigt zu sein, wodurch der Fluss des Füllmaterials (R) geführt wird.

10. Batteriemodul (10) nach Anspruch 8,
wobei die Höhe der Zellenaufnahmewand (222a) und die Tiefe (h3, h5, h6) der Leckverhinderungsnut (230a, 231a) konfiguriert sind, der Höhe der Rahmenwand (210a) zu entsprechen.

11. Batteriemodul (10) nach Anspruch 4,
wobei der Zellenrahmen (200) aufweist:
einen Zellenoberrahmen (202), der konfiguriert ist, die oberen Abschnitte der mehreren Batteriezellen (100) aufzunehmen, wobei die Rahmenwand (21ob) des Zellenoberrahmens (202) den Umfang des Zellenoberrahmens (202) bildet; und
einen Zellenunterrahmen (201), der mit dem Boden des Zellenoberrahmens (202) gekoppelt ist und konfiguriert ist, die unteren Abschnitte der mehreren Batteriezellen (100) aufzunehmen, wobei die Rahmenwand (210a) des Zellenunterrahmens (201) den Umfang des Zellenunterrahmens (201) bildet, und
wobei die Leckverhinderungsnut (230a) in dem Zellenunterrahmen (201) vorgesehen ist.

12. Batteriemodul (10) nach Anspruch 11,
wobei der Zellenrahmen (200) eine obere Öffnung aufweist, durch die das Füllmittel (R) in den Zellenrahmen (200) gefüllt wird.

13. Batteriemodul (10) nach Anspruch 11,
wobei der Zellenbodenrahmen (201) einen Kopplungsabschnitt (213a) aufweist, mit dem der Zellenoberrahmen (202) gekoppelt ist, und
wobei die Leckverhinderungsnut (230a) auf der Innenseite des Kopplungsabschnitts (213a) vorgesehen ist.

14. Batteriemodul (10) nach Anspruch 13,
wobei der Zellenbodenrahmen (201) aufweist:
eine erste Wand (211a), die als die Außenwand des Zellenbodenrahmens (201) definiert ist; und
eine zweite Wand (212a), die von der ersten Wand (211a) nach innen beabstandet ist, und
wobei der Kopplungsabschnitt (213a) zwischen der ersten Wand (211a) und der zweiten Wand (212a) vorgesehen ist, so dass ein Abschnitt des Zellenoberrahmens (202) in denselben eingesetzt ist.

15. Batteriemodul (10) nach Anspruch 14,
wobei die Leckverhinderungsnut (230a) an der Innenseite der zweiten Wand (212a) vorgesehen ist.

16. Batteriemodul (10) nach Anspruch 3,
wobei das Füllmaterial (R) als ein Vergussharz vorgesehen ist.

17. Batteriepack (20) aufweisend zumindest ein Batteriemodul (10) nach einem der Ansprüche 1 bis 16.

18. Fahrzeug (30) aufweisend zumindest ein Batteriepack (20) nach Anspruch 17.

## Revendications

1. Cadre de cellule (200), comprenant:
une paroi de cadre (210, 210a, 201b) formant un pourtour du cadre de cellule (200) ;
une partie d'hébergement de cellule (220, 220a, 220b) située à l'intérieur de la paroi de cadre (210, 210a, 210b), et configurée pour accueillir une pluralité de cellules de batterie (100) ; et
une cannelure de prévention de fuites (230, 230a) pour recevoir une charge (R) introduite entre la pluralité des cellules de batterie (100) et agencée entre la paroi du cadre (210, 210a, 210b) et la partie d'hébergement de cellule (220, 220a, 220b),
**caractérisé en ce que** la partie d'hébergement de cellule (220, 220a, 220b) comprend :
une pluralité d'orifices d'hébergement de cellules cylindriques (221, 221a) disposés côte à côte de sorte que la pluralité de cellules de batterie (100) soient insérées respectivement dans ceux-ci; et
une paroi d'hébergement de cellule (222, 222a) réalisée le long du pourtour extérieur des orifices d'hébergement de cellule (221, 221a), et
la cannelure de prévention de fuites (230, 230a) étant installée entre la paroi d'hébergement de cellule (222, 222a) et la paroi de cadre (210, 210a, 210b).

2. Cadre de cellules (200) selon la revendication 1,
la cannelure de prévention de fuites (230, 230a) comprenant :
une pluralité de premières cannelures (231, 231a) formées entre les orifices d'hébergement de cellules adjacentes parmi la pluralité d'orifices d'hébergement de cellule (221, 221a) ; et
des deuxièmes cannelures (232, 232a) formées entre des premières cannelures adjacentes parmi la pluralité de premières cannelures (231, 231a) de façon à communiquer avec les premières cannelures adjacentes, et
la première cannelure (231, 231a) et la deuxième cannelure (232, 232a) présentant des profondeurs (h1, h2 ; h3, h4 ; h5, h6) différentes.

3. Module de batterie (10) comprenant :
une pluralité de cellules de batterie (100) ; et
un cadre de cellule (200) selon la revendication 1 ou la revendication 2.

4. Module de batterie (10) selon la revendication 3,
la cannelure de prévention de fuites (230, 230a) étant installée le long de la paroi de cadre (210, 210a, 210b).

5. Module de batterie (10) selon la revendication 3,
la paroi d'hébergement de cellule (222, 222a) étant inclinée vers la cannelure de prévention de fuites (230, 230a).

6. Module de batterie (10) selon la revendication 3,
la pluralité d'orifices d'hébergement de cellules (221, 221a) étant agencée sous une forme cylindrique, et
la cannelure de prévention de fuites (230, 230a) étant agencée entre des orifices d'hébergement de cellules adjacentes parmi la pluralité d'orifices d'hébergement de cellule (221, 221a) et la paroi de cadre (210, 210a, 210b).

7. Module de batterie (10) selon la revendication 6,
la cannelure de prévention de fuites (230, 230a) étant agencée sous une forme entourée par la partie d'hébergement de cellule (220, 220a, 220b) et la paroi de cadre (210, 210a, 210b).

8. Module de batterie (10) selon la revendication 7,
une pluralité de cannelures de prévention de fuites (230a, 231, 232, 231a, 232a) étant agencées de façon à être espacées les unes des autres, et
la pluralité de cannelures de prévention de fuites (231, 232, 231a, 232a) étant agencées afin qu'elles soient connectées l'une à l'autre.

9. Module de batterie (10) selon la revendication 3 lorsqu'elle est fonction de la revendication 2,
la cannelure de prévention de fuites (230, 230a) comprenant une surface inclinée (233, 233a) agencée pour être inclinée vers la première cannelure (231, 231a) entre la première cannelure (231, 231a) et la deuxième cannelure (232, 232a), en guidant ainsi l'écoulement de la charge (R).

10. Module de batterie (10) selon la revendication 8,
la hauteur de la paroi d'hébergement de cellule (222a) et la profondeur (h3, h5, h6) de la cannelure de prévention de fuites (230a, 231a) étant configurées afin qu'elles correspondent à la hauteur de la paroi de cadre (210a).

11. Module de batterie (10) selon la revendication 4,
le cadre de cellule (200) comprenant :
un cadre supérieur de cellule (202) configuré pour accueillir les parties supérieures de la pluralité de cellules de batterie (100), la paroi de cadre (210b) du cadre supérieur de cellule (202) formant le pourtour du cadre supérieur de cellule (202) ; et
un cadre inférieur de cellule (201) couplé au bas du cadre supérieur de cellule (202), et configuré pour accueillir les parties inférieures de la pluralité de cellules de batterie (100), la paroi de cadre (210a) du cadre inférieur de cellule (201) formant le pourtour du cadre inférieur de cellule (201), et
la cannelure de prévention de fuites (230a) étant agencée dans le cadre inférieur de cellule (201).

12. Module de batterie (10) selon la revendication 11,
le cadre de cellule (200) comprenant une ouverture supérieure par laquelle la charge (R) est introduite dans le cadre de cellule (200).

13. Module de batterie (10) selon la revendication 11,
le cadre inférieur de la cellule (201) comprenant une partie de couplage (213a) à laquelle le cadre supérieur de cellule (202) est couplé, et
la cannelure de prévention de fuites (230a) étant aménagée sur le côté intérieur de la partie de couplage (213a).

14. Module de batterie (10) selon la revendication 13,
le cadre inférieur de cellule (201) comprenant :
une première paroi (211a) définie comme étant la paroi extérieure du cadre inférieur de la cellule (201) ; et
une deuxième paroi (212a) espacée vers l'intérieur de la première paroi (211a), et
la partie de couplage (213a) étant agencée entre la première paroi (211a) et la deuxième paroi (212a) de sorte qu'une partie du cadre supérieur de cellule (202) soit insérée dans la même paroi.

15. Module de batterie (10) selon la revendication 14,
la cannelure de prévention de fuites (230a) étant aménagée sur le côté intérieur de la deuxième paroi (212a).

16. Module de batterie (10) selon la revendication 3,
la charge (R) se présentant comme une résine d'enrobage.

17. Bloc-batterie comprenant au moins un module de batterie (10) selon une quelconque des revendications 1 à 16.

18. Véhicule (30) comprenant au moins un bloc-batterie (20) selon la revendication 17.
